# EUROPEAN PATENT APPLICATION

(11) **EP 0 856 362 A1**
(43) Date of publication of application: **05.08.1998**
(21) Application number: 98300253.6
(22) Date of filing: 14.01.1998
(51) Int. Cl.: B05B 13/04, F16H 21/20

(54) **An oscillating stroke reciprocator**

(30) Priority: 15.01.1997 GB 9700713
(71) Applicant: ITW Limited, Swansea SA5 4YE (GB)
(72) Inventor: Lush, Alan Charles, Cove, Farnborough, Hampshire (GB)
(74) Representative: Pedder, James Cuthbert

(57) **Abstract**

A linear oscillating stroke reciprocator comprises a frame (15), a rectilinear post (5) carried by the frame (15), a carriage (3) mounted on the post (5) for linear motion therealong, and a drive arm (7) pivoted to the frame (15) at one end and connected to the carriage (3) through a lost motion device (6). This lost motion device (6) takes up longitudinal movements of the drive arm (7) while transmitting movements of the drive arm (7) at right angles thereto to the carriage (3). The reciprocator includes a rotary drive (8) which drives an eccentric (13) drive. A drive lever (10) is pivotally connected at one end to the drive arm (7) and at the other end to the eccentric (13).

## Description

This invention relates to an oscillating stoke reciprocator, and more particularly to a reciprocator suitable for imparting a smooth, linear oscillating motion to an array of application spray guns.

Existing mechanisms are known which oscillate an array of spray guns. These have a short stroke such that a change of direction of the driving motor is necessary. This creates a judder coupled with an erratic movement of the oscillating motion of the spray guns with the result that the spray guns are unable to provide an even coating of the sprayed article.

The present invention seeks to provide a linear oscillating stroke reciprocator which enables the above disadvantage to be overcome or substantially reduced.

According to the invention, there is provided a linear oscillating stroke reciprocator comprising a frame, a rectilinear post carried by the frame, a carriage mounted on the post for linear motion therealong, a drive arm pivoted to the frame at one end and connected to the carriage through a lost motion device taking up longitudinal movements of the drive arm while transmitting movements of the drive arm at right angles thereto to the carriage, a rotary drive, an eccentric driven by the rotary drive and a drive lever pivotally connected at one end to the drive arm and at the other end to the eccentric.

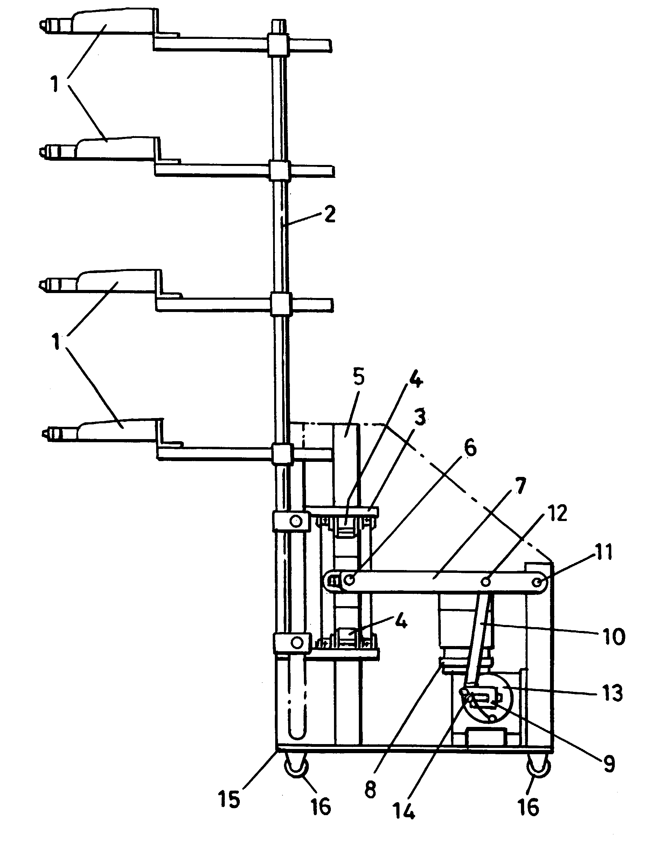

The invention will now be described in greater detail, by way of example, with reference to the drawing, the single figure of which is a diagrammatic elevation of a spray device incorporating one embodiment of the invention.

As shown in the drawing, the spray device comprises an array of spray guns 1 mounted on a vertical post 2 which in turn is carried by a carriage 3. The carriage 3 is mounted on a rectangular post 5 by means of rollers 4 for reciprocation up and down the post. The post 5 is carried on a frame 15.

The carriage 3 is driven up and down the post 5 by a drive arm 7 pivotally connected at one end to the frame 15 at 11 and at the other end to the carriage through a lost motion connection 6. As will be appreciated, the pivotal arrangement 11 of the drive arm is such as to allow it to pivot in an arc in a vertical plane.

The lost motion connection 6 is in the form of a longitudinally arranged slot which cooperates with a pin on the carriage. Thus, if the movement of the drive arm is resolved in two directions at right angles, the first direction parallel to the direction of movement of the carriage and the second direction at right angles thereto in the plane of motion of the drive arm 7, movements in the first direction are transmitted to the carriage 3 while movements in the second direction are taken up by the slot and pin connection 6.

Pivotal movement of the drive arm 7 are produced by a drive lever 10, pivotally connected at one end at 12 to an intermediate position on the drive arm 7 and at the other end at 14 to a rotary eccentric arrangement 13 driven by a geared motor 8. The eccentricity of the arrangement 13 is adjustable by means of a screw arrangement 9 whereby the throw of the drive lever and thus the travel of the carriage 3 can be controlled.

Thus, in operation of the device, rotation of the motor 8 in a single sense will drive the eccentric arrangement 13 to cause a reciprocating movement of the drive lever 10. This in turn will cause the drive arm 6 to oscillate through an arc about the pivot 11 and this oscillating movement of the drive arm 7 will be converted into a linear reciprocation of the carriage 3 by means of the lost motion device 6.

For enabling the position of the spray guns I to be adjusted relative to a workpiece to be sprayed, the frame 15 is suitably mounted on castors or the like 16.

The new linear oscillating stroke reciprocator as described above exhibits the advantage of enabling the use of a continuously driven single direction motor eliminating the need for the reversible drive motor commonly used in short stroke driven machines. The eccentric drive arrangement provides for a smooth oscillation without judder at the spray guns, allowing a natural smooth acceleration and deceleration of the spray apparatus and carriage,

It also provides the advantage of enabling the provision of a simple and reliable mechanism which eliminates the need, for example, of chain drives, providing a true linear motion without any minor deviations common in current machines.

It will be appreciated that various modifications of or additions to the described embodiment may be made without departing from the scope of the invention. For example, while linear oscillation in a vertical direction has been described, it would be equally possible to use the mechanism to provide linear oscillation in a horizontal direction or indeed along any other desired line.

While the invention has been particularly concerned with oscillating spray guns, it could equally be employed for oscillating other apparatus as may be desired.

Additional control of the stroke of the oscillations could be achieved by making the position of the pivot 12 adjustable along the drive arm 7.

## Claims

1. A linear oscillating stroke reciprocator comprising a frame (15), a linear post (5) carried by the frame (15), a carriage (3) mounted on the post (5) for linear motion therealong, a drive arm (7) pivoted to the frame (15) at one end and connected to the carriage (3) through a lost motion device (6) taking up longitudinal movements of the drive arm (7) while transmitting movements of the drive arm (7) at right angles thereto to the carriage (3), a rotary drive (8), an eccentric (13) driven by the rotary drive (8) and a drive lever (10) pivotally connected at one end to the drive arm (7) and at the other end to the eccentric (13).

2. A reciprocator as claimed in claim 1, wherein the lost motion device (6) comprises a longitudinal slot in the drive arm (7) and a cooperating pin on the carriage (3).

3. A reciprocator as claimed in claim 1 or 2, wherein the drive lever (10) is pivoted to the drive arm (7) between the connection to the frame (15) and the lost motion device (6).

4. A reciprocator as claimed in any preceding claim, wherein the carriage (3) carries one or more spray guns (1).

5. A reciprocator as claimed in any preceding claim, wherein the carriage (3) carries rollers (4) for engagement with the post (5).

6. A reciprocator as claimed in any preceding claim, wherein the frame (15) is mounted on wheels (16) for portability thereof.
